# EUROPEAN PATENT APPLICATION

(11) **EP 4 570 613 A1**
(43) Date of publication of application: **18.06.2025**
(21) Application number: 24214325.3
(22) Date of filing: 20.11.2024
(51) Int. Cl.: B61D 15/02, B62D 5/04, B62D 6/00

(54) **STEERING CONTROL DEVICE**

(30) Priority: 14.12.2023 JP 2023211275
(71) Applicant: JTEKT CORPORATION, Kariya-shi, Aichi-ken, 448-8652 (JP)
(72) Inventor: MATSUDA, Satoshi, Kariya-shi, Aichi-ken,, 448-8652 (JP); NAMIKAWA, Isao, Kariya-shi, Aichi-ken,, 448-8652 (JP); ANRAKU, Koji, Kariya-shi, Aichi-ken,, 448-8652 (JP); IIDA, Tomoyuki, Toyota-shi, Aichi-ken,, 471-8571 (JP); YAMASHITA, Masaharu, Toyota-shi, Aichi-ken,, 471-8571 (JP); SHIBATA, Kenji, Toyota-shi, Aichi-ken,, 471-8571 (JP)
(74) Representative: Winter, Brandl - Partnerschaft mbB

(57) **Abstract**

An assist torque command value calculation unit (82) of a steering control device (1) is configured to calculate an assist torque command value based on a first state variable reflecting a steering state of a steering wheel (5). An axial force torque calculation unit (83) is configured to calculate an axial force torque based on a second state variable reflecting a turning state of turning wheels (6). A calculator (84) is configured to calculate a reaction force torque command value by subtracting the axial force torque from the assist torque command value. A limiting processing unit is configured to limit the first state variable or the assist torque command value in a case where an event in which an output of the turning motor (31) is limited occurs.

## Description

### BACKGROUND OF THE INVENTION

### 1. Field of the Invention

The present invention relates to a steering control device.

### 2. Description of Related Art

In the related art, a so-called steer-by-wire type steering device is known in which power transmission between a steering wheel and turning wheels is separated. The steering device includes a reaction force motor that is a source of a steering reaction force applied to a steering shaft, and a turning motor that is a source of a turning force to turn the turning wheels. When a vehicle travels, a control device of the steering device generates the steering reaction force through the reaction force motor and turns the turning wheels through the turning motor.

For example, a control device of Japanese Unexamined Patent Application Publication No. 2020-83059 (JP 2020-83059 A) executes an output limiting process of limiting an output of a turning motor and a reaction force increasing process of increasing a steering reaction force in a case where an output limit condition is satisfied. The output limit condition includes a condition in which a temperature of the turning motor exceeds a temperature threshold or a condition in which a voltage supplied from a power supply device to the turning motor falls below a voltage threshold. The steering reaction force increases in synchronization with the limitation of the output of the turning motor. Therefore, a driver can recognize that turning followability of turning wheels is reduced, by a response through a steering wheel.

In the output limiting process, the control device limits the output of the turning motor, for example, by decreasing a current limit value as a steering speed of the steering wheel increases. The current limit value is an upper limit of a current supplied to the turning motor. In the reaction force increasing process, the control device increases the steering reaction force, for example, by increasing a damping component of the steering reaction force compared to a case where the output limiting process is not executed. The damping component of the steering reaction force increases as the steering speed increases.

### SUMMARY OF THE INVENTION

In a case where the reaction force is increased by increasing the damping component of the steering reaction force in the reaction force increasing process executed in synchronization with the output limiting process, as in the control device of JP 2020-83059 A, the following concern may be raised. That is, in a case where the steering speed is slow, the steering reaction force is not sufficiently increased, and there is concern that the driver of a vehicle does not realize that the output of the turning motor is limited.

A first aspect of the invention relates to a steering control device configured to control electric power supply to a reaction force motor configured to generate a steering reaction force applied to a steering wheel in which power transmission to turning wheels of a vehicle is separated, based on a reaction force torque command value calculated according to a steering state of the steering wheel, and control electric power supply to a turning motor configured to generate a turning force for turning the turning wheels, based on a turning torque command value calculated according to the steering state of the steering wheel. The steering control device includes an assist torque command value calculation unit, an axial force torque calculation unit, a calculator, and a limiting processing unit. The assist torque command value calculation unit is configured to calculate an assist torque command value that is a torque in the same direction as a steering direction of the steering wheel based on a first state variable reflecting the steering state of the steering wheel. The axial force torque calculation unit is configured to calculate an axial force acting on a turning shaft configured to turn the turning wheels based on a second state variable reflecting a turning state of the turning wheels, and calculate an axial force torque by converting the calculated axial force into a torque with respect to the steering wheel. The calculator is configured to calculate the reaction force torque command value by subtracting the axial force torque from the assist torque command value. The limiting processing unit is configured to limit the first state variable or the assist torque command value in a case where an event in which an output of the turning motor is limited occurs.

With this configuration, in a case where the event in which the output of the turning motor is limited occurs, the first state variable or the assist torque command value is limited. Since the reaction force torque command value is increased by an amount by which the first state variable or the assist torque command value is limited, the steering reaction force applied to the steering wheel also increases. Therefore, a driver of the vehicle can recognize that the output of the turning motor is limited by feeling the steering reaction force through the steering wheel as a response. Therefore, the driver of the vehicle can be appropriately informed that the output of the turning motor is limited.

In the steering control device, the limiting processing unit may be configured to execute a limiting process of limiting the first state variable in a case where the event occurs. The limiting process may include a plurality of limiting processes having different limit modes for the first state variable. The limiting processing unit may be configured to switch the limiting process to be executed according to a content of the event.

With this configuration, any one of the limiting processes with different limit modes for the first state variable is executed according to the content of the event in which the output of the turning motor is limited. Therefore, a value of the first state variable can be appropriately limited according to the content of the event in which the output of the turning motor is limited.

In the steering control device, the limiting process may include a first limiting process, a second limiting process, and a third limiting process. The first limiting process is a process of limiting a change range of the first state variable based on a limit value determined for the first state variable or a process of limiting a value of the first state variable based on a conversion map that specifies a relationship between the first state variable and the first state variable after the limiting. The second limiting process is a process of setting, with respect to the first state variable, a first dead zone that is a range of the value of the first state variable including zero, and limiting the value of the first state variable to zero in a case where the value of the first state variable reaches a value within the first dead zone. The third limiting process is a process of setting, with respect to an absolute value of the first state variable, a second dead zone that is a range of the absolute value of the first state variable specified by a boundary value greater than zero, and gradually increasing the second dead zone by gradually decreasing the boundary value after the absolute value of the first state variable reaches a value within the second dead zone such that an absolute value of the first state variable limited to the boundary value.

With this configuration, any one of the first to third limiting processes is executed according to the content of the event in which the output of the turning motor is limited. Therefore, a value of the first state variable can be appropriately limited according to the content of the event in which the output of the turning motor is limited. Additionally, since the limit modes for the value of the first state variable of the first to third limiting processes are different, the driver of the vehicle can be given different steering feels according to the content of the event in which the output of the turning motor is limited, as a response through the steering wheel. Therefore, the driver of the vehicle can recognize the content of the event in which the output of the turning motor is limited by feeling the steering reaction force through the steering wheel as a response.

In the steering control device, the event may include a first event in which a temperature of the turning motor excessively rises, a second event in which a voltage input to the steering control device decreases, a third event in which a high load is continuously applied to the turning motor, and a fourth event in which, in a case where the turning motor has two systems of winding groups, electric power supply to any one of the two systems of winding groups is difficult. In this case, the limiting processing unit may be configured to execute the first limiting process in a case where the first event or the fourth event occurs, execute the second limiting process in a case where the second event occurs, and execute the third limiting process in a case where the third event occurs.

With this configuration, in a case where the first event or the fourth event occurs, the first limiting process is executed. By executing the first limiting process, the driver of the vehicle can be given a steering feel as if the steering wheel has become heavier, as a response through the steering wheel. The driver of the vehicle can recognize that the first event or the fourth event has occurred by feeling the steering reaction force through the steering wheel as a response.

In a case where the second event occurs, the second limiting process is executed. By executing the second limiting process, the driver of the vehicle can be given a steering feel with a sense of resistance, as a response through the steering wheel. The driver of the vehicle can recognize that the second event has occurred by feeling the steering reaction force through the steering wheel as a response.

In a case where the third event occurs, the third limiting process is executed. By executing the third limiting process, as a response through the steering wheel, the driver of the vehicle can be given a steering feel as if the steering wheel is gradually pushed back, or a steering feel with a sense of collision. The driver of the vehicle can recognize that the third event has occurred by feeling the steering reaction force through the steering wheel as a response.

In the steering control device, the turning motor may be configured such that, in a case where the event occurs, the output of the turning motor is limited by limiting a current supplied to the turning motor by a predetermined limiting ratio. In this case, the limiting processing unit may be configured to limit the assist torque command value by the same ratio as the predetermined limiting ratio in a case where the event occurs.

With this configuration, in a case where an event occurs in which the output of the turning motor is limited, the assist torque command value is limited by the same ratio as the limiting ratio of the current of the turning motor. Therefore, the steering reaction force increases according to a degree to which the output of the turning motor is limited. Therefore, the driver of the vehicle can recognize that the output of the turning motor is limited by feeling the steering reaction force through the steering wheel as a response.

In the steering control device, the limiting processing unit may be configured to, in a case where the event occurs, limit the assist torque command value based on a conversion map that specifies a relationship between the assist torque command value and the assist torque command value after the limiting.

With this configuration, by using the conversion map, the assist torque command value after the limiting can be easily obtained from the assist torque command value. Obtaining the assist torque command value after the limiting by using the conversion map is to limit the assist torque command value used to control the reaction force motor.

In the steering control device, the limiting processing unit may be configured to, in a case where the event occurs, limit the assist torque command value based on a conversion map that specifies a relationship between the first state variable and the assist torque command value after the limiting.

With this configuration, by using the conversion map, the assist torque command value after the limiting can be easily obtained from the first state variable. Obtaining the assist torque command value after the limiting by using the conversion map is to limit the assist torque command value used to control the reaction force motor.

In the steering control device, the first state variable may be a steering torque applied to the steering wheel. The second state variable may be at least one of a current of the turning motor and a target rotation angle of a pinion shaft that is rotated in conjunction with the turning shaft.

As in the configuration, the steering torque is an example of the first state variable reflecting the steering state of the steering wheel. In addition, the current of the turning motor or the target rotation angle of the pinion shaft that is rotated in conjunction with the turning shaft is an example of the second state variable reflecting the turning state of the turning wheels.

With the steering control device according to the invention, the driver of the vehicle can be appropriately informed that the output of the turning motor is limited.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration diagram of a steering device in which a first embodiment of a steering control device is mounted;
FIG. 2 is a block diagram of a reaction force control device and a turning control device according to the first embodiment;
FIG. 3 is a block diagram of a reaction force torque command value calculation unit according to the first embodiment;
FIG. 4 is a graph for describing a first limiting process according to the first embodiment;
FIG. 5 is a graph for describing a second limiting process according to the first embodiment;
FIG. 6 is a graph for describing a third limiting process according to the first embodiment;
FIG. 7 is a graph showing a first conversion map according to a modification example of the first embodiment;
FIG. 8 is a graph showing a second conversion map according to a modification example of the first embodiment;
FIG. 9 is a block diagram of a reaction force torque command value calculation unit according to a second embodiment;
FIG. 10 is a graph showing a third conversion map according to a modification example of another embodiment; and
FIG. 11 is a graph showing a fourth conversion map according to a modification example of another embodiment.

### DETAILED DESCRIPTION OF EMBODIMENTS

### First Embodiment

Hereinafter, a first embodiment of a steering control device will be described.

### Overall Configuration

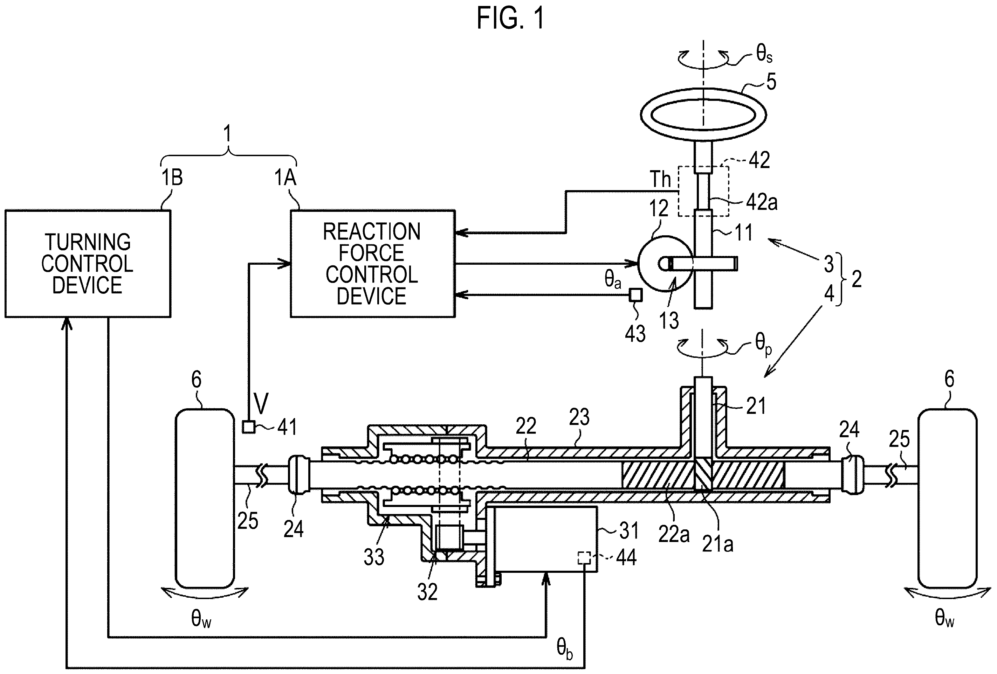

As shown in FIG. 1, a control target of the steering control device 1 is a steer-by-wire type steering device 2. The steering device 2 includes a steering mechanism 3 and a turning mechanism 4. The steering mechanism 3 is a mechanism part that is steered by a driver through a steering wheel 5. The turning mechanism 4 is a mechanism part that turns turning wheels 6 of a vehicle in response to steering of the steering wheel 5. The steering control device 1 includes a reaction force control device 1A and a turning control device 1B. A control target of the reaction force control device 1A is the steering mechanism 3. The reaction force control device 1A performs reaction force control. The reaction force control device 1A corresponds to a reaction force controller. A control target of the turning control device 1B is the turning mechanism 4. The turning control device 1B performs turning control. The turning control device 1B corresponds to a turning controller.

The steering mechanism 3 includes a steering shaft 11, a reaction force motor 12, and a reduction gear 13. The steering wheel 5 is integrally rotatably connected to the steering shaft 11. The reaction force motor 12 is a source of a steering reaction force applied to the steering shaft 11. The steering reaction force is a force in a direction opposite to a steering direction of the steering wheel 5. The reaction force motor 12 is, for example, a three-phase brushless motor. The reduction gear 13 reduces rotation of the reaction force motor 12 and transmits the reduced rotation to the steering shaft 11.

The turning mechanism 4 includes a pinion shaft 21, a turning shaft 22, and a housing 23. The housing 23 rotatably supports the pinion shaft 21. The housing 23 accommodates the turning shaft 22 such that the turning shaft 22 can reciprocate. Transmission of power between the turning shaft 22 and the steering wheel 5 is separated. The pinion shaft 21 is provided to cross the turning shaft 22. Pinion teeth 21a of the pinion shaft 21 mesh with rack teeth 22a of the turning shaft 22. Tie rods 25 are connected to both ends of the turning shaft 22 through rack ends 24 formed of ball joints. A tip end of the tie rod 25 is connected to a knuckle (not shown) to which the turning wheel 6 is assembled.

The turning mechanism 4 includes a turning motor 31, a transmission mechanism 32, and a conversion mechanism 33. The turning motor 31 is a source of a turning force applied to the turning shaft 22. The turning force is a force for turning the turning wheels 6. The turning motor 31 is, for example, a three-phase brushless motor. The transmission mechanism 32 is, for example, a belt transmission mechanism. The transmission mechanism 32 transmits rotation of the turning motor 31 to the conversion mechanism 33. The conversion mechanism 33 is, for example, a ball screw mechanism. The conversion mechanism 33 converts the rotation transmitted through the transmission mechanism 32 into an axial movement of the turning shaft 22.

The axial movement of the turning shaft 22 changes a turning angle θ_{w} of the turning wheel 6. The pinion teeth 21a of the pinion shaft 21 mesh with the rack teeth 22a of the turning shaft 22. Therefore, the pinion shaft 21 rotates in conjunction with the movement of the turning shaft 22. The pinion shaft 21 is a shaft or a rotating body that rotates in conjunction with a turning operation of the turning wheels 6.

The reaction force control device 1A controls an operation of the reaction force motor 12. The reaction force control device 1A includes a processing circuit including any one of the following three configurations A1, A2, A3. A1. One or more processors operating according to a computer program that is software. The processor includes a central processing unit (CPU) and a memory.

A2. One or more dedicated hardware circuits, such as an application-specific integrated circuit (ASIC), that executes at least a part of various processes. The ASIC includes a CPU and a memory.

A3. A hardware circuit in which the configurations A1 and A2 are combined. The memory is a computer-readable medium and stores a program that describes processing or an instruction for a computer. In the present embodiment, the computer is a CPU. The memory includes a random-access memory (RAM) and a read-only memory (ROM). The CPU performs various controls by executing a program stored in the memory at a predetermined calculation cycle.

The reaction force control device 1A receives a detection result of an in-vehicle sensor. The sensor includes a vehicle speed sensor 41, a torque sensor 42, and a rotation angle sensor 43. The vehicle speed sensor 41 detects a vehicle speed V. The vehicle speed V is a state variable reflecting a traveling state of the vehicle. The torque sensor 42 is provided on the steering shaft 11. The torque sensor 42 is located on a steering wheel 5 side with respect to a portion of steering shaft 11 to which the reduction gear 13 is connected. The torque sensor 42 detects a steering torque Tₕ applied to the steering shaft 11. The steering torque Tₕ is calculated based on an amount of twist of a torsion bar 42a provided in the steering shaft 11. The steering torque Tₕ is an example of a first state variable reflecting a steering state of the steering wheel 5. The rotation angle sensor 43 is provided in the reaction force motor 12. The rotation angle sensor 43 detects a rotation angle θₐ of the reaction force motor 12.

The steering torque Tₕ and the rotation angle θₐ of the reaction force motor 12 are, for example, positive values in a case where the steering wheel 5 is steered to the right, and are negative values in a case where the steering wheel 5 is steered to the left.

The reaction force control device 1A controls the operation of the reaction force motor 12 by using detection results of the vehicle speed sensor 41, the torque sensor 42, and the rotation angle sensor 43. The reaction force control device 1A controls electric power supply to the reaction force motor 12 such that the steering reaction force according to the steering torque Tₕ is generated in the reaction force motor 12.

The turning control device 1B controls an operation of the turning motor 31. The turning control device 1B includes a processing circuit including any one of the three configurations A1, A2, A3 described above, as in the reaction force control device 1A.

The turning control device 1B receives a detection result of an in-vehicle sensor. The sensor includes a rotation angle sensor 44. The rotation angle sensor 44 is provided in the turning motor 31. The rotation angle sensor 44 detects a rotation angle θ_{b} of the turning motor 31. The rotation angle θ_{b} of the turning motor 31 is, for example, a positive value in a case where the steering wheel 5 is steered to the right, and is a negative value in a case where the steering wheel 5 is steered to the left.

The turning control device 1B controls the operation of the turning motor 31 by using the detection result of the rotation angle sensor 44. The turning control device 1B controls electric power supply to the turning motor 31 such that the turning wheels 6 are turned according to the steering state of the steering wheel 5.

### Configuration of Reaction Force Control Device 1A

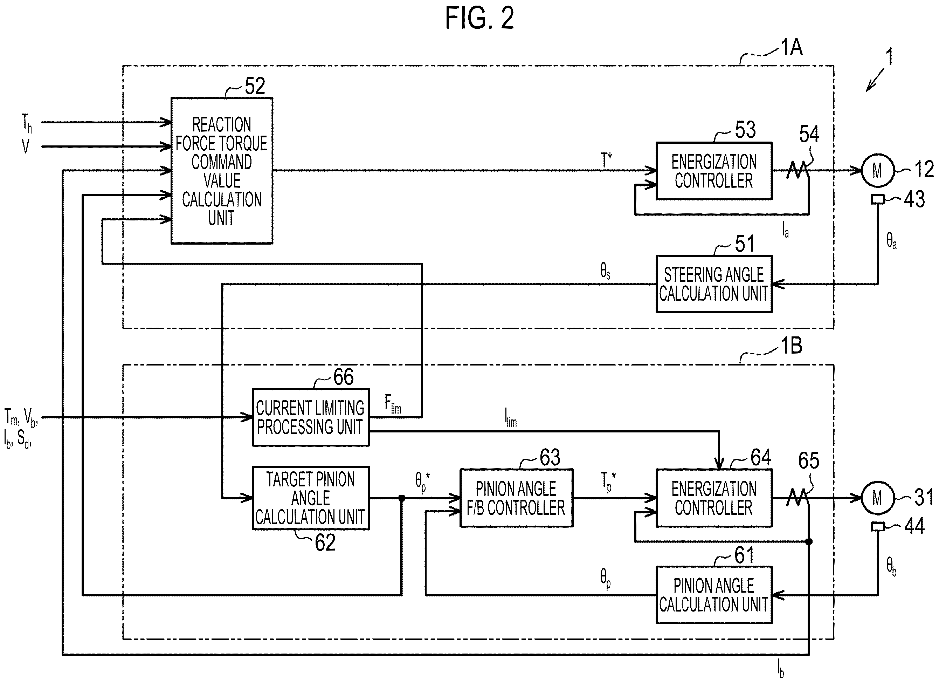

Next, the configuration of the reaction force control device 1A will be described. As shown in FIG. 2, the reaction force control device 1A includes a steering angle calculation unit 51, a reaction force torque command value calculation unit 52, and an energization controller 53.

The steering angle calculation unit 51 calculates a steering angle θₛ of the steering wheel 5 based on the rotation angle θₐ of the reaction force motor 12 detected through the rotation angle sensor 43. The reaction force torque command value calculation unit 52 calculates a reaction force torque command value T* based on the steering torque Tₕ and the vehicle speed V. The reaction force torque command value T* is a target value of the steering reaction force to be generated in the reaction force motor 12. The steering reaction force is a torque in a direction opposite to the steering direction of the steering wheel 5. As an absolute value of the steering torque Tₕ increases and the vehicle speed V decreases, an absolute value of the reaction force torque command value T* further increases.

The energization controller 53 supplies electric power according to the reaction force torque command value T* to the reaction force motor 12. Specifically, the energization controller 53 calculates a current command value for the reaction force motor 12 based on the reaction force torque command value T*. The energization controller 53 detects a value of a current Iₐ generated in an electric power supply path through a current sensor 54 provided in the electric power supply path for the reaction force motor 12. The value of the current Iₐ is a value of a current supplied to the reaction force motor 12. The energization controller 53 obtains a deviation between the current command value and the value of the current Iₐ, and controls the electric power supply to the reaction force motor 12 such that the deviation is eliminated. As a result, the reaction force motor 12 generates a torque according to the reaction force torque command value T*.

### Configuration of Turning Control Device 1B

Next, the configuration of the turning control device 1B will be described. As shown in FIG. 2, the turning control device 1B includes a pinion angle calculation unit 61, a target pinion angle calculation unit 62, a pinion angle feedback controller 63, an energization controller 64, a current sensor 65, and a current limiting processing unit 66.

The pinion angle calculation unit 61 calculates a pinion angle θₚ based on the rotation angle θ_{b} of the turning motor 31 detected through the rotation angle sensor 44. The pinion angle θₚ is a rotation angle of the pinion shaft 21. The turning motor 31 and the pinion shaft 21 move in conjunction with each other through the transmission mechanism 32, the conversion mechanism 33, and the turning shaft 22. Therefore, there is a correlation between the rotation angle θ_{b} of the turning motor 31 and the pinion angle θₚ. The pinion angle θₚ can be obtained from the rotation angle θ_{b} of the turning motor 31 by using this correlation. The pinion shaft 21 meshes with the turning shaft 22. Therefore, there is also a correlation between the pinion angle θₚ and a movement amount of the turning shaft 22. That is, the pinion angle θₚ is a value reflecting the turning angle θ_{w} of the turning wheel 6.

The target pinion angle calculation unit 62 calculates a target pinion angle θₚ* based on the steering angle θₛ calculated by the steering angle calculation unit 51. The target pinion angle θₚ* is a target angle of the pinion angle θₚ. The target pinion angle calculation unit 62 calculates the target pinion angle θₚ* such that a steering angle ratio set according to product specifications or the like is achieved. The steering angle ratio is a ratio of the turning angle θ_{w} to the steering angle θₛ.

The target pinion angle calculation unit 62 sets the steering angle ratio according to the traveling state of the vehicle, such as the vehicle speed V, and calculates the target pinion angle θₚ* according to the set steering angle ratio. The target pinion angle calculation unit 62 calculates the target pinion angle θₚ* such that the turning angle θ_{w} with respect to the steering angle θₛ increases as the vehicle speed V decreases. The target pinion angle calculation unit 62 calculates the target pinion angle θₚ* such that the turning angle θ_{w} with respect to the steering angle θₛ decreases as the vehicle speed V increases. The target pinion angle calculation unit 62 calculates a correction angle with respect to the steering angle θₛ to achieve the steering angle ratio set according to the traveling state of the vehicle, and calculates the target pinion angle θₚ* according to the steering angle ratio by adding the calculated correction angle to the steering angle θₛ. The target pinion angle θₚ* is a target rotation angle of the pinion shaft 21, and is an example of a second state variable reflecting a turning state of the turning wheels 6.

Depending on product specifications or the like, the target pinion angle calculation unit 62 may calculate the target pinion angle θₚ* such that the steering angle ratio is "1:1" regardless of the traveling state of the vehicle.

The pinion angle feedback controller 63 receives the target pinion angle θₚ* calculated by the target pinion angle calculation unit 62 and the pinion angle θₚ calculated by the pinion angle calculation unit 61. The pinion angle feedback controller 63 calculates a turning torque command value Tₚ* through feedback control of the pinion angle θₚ such that the pinion angle θₚ follows the target pinion angle θₚ*. The turning torque command value Tₚ* is a command value for the torque generated by the turning motor 31, and is a target value of the turning force.

The energization controller 64 supplies electric power according to the turning torque command value Tₚ* to the turning motor 31. Specifically, the energization controller 64 calculates a current command value for the turning motor 31 based on the turning torque command value Tₚ*. The current sensor 65 is provided in an electric power supply path for the turning motor 31. The energization controller 64 detects a value of a current I_{b} generated in the electric power supply path for the turning motor 31 through the current sensor 65. The value of the current I_{b} is a value of the current supplied to the turning motor 31, and is an example of the second state variable reflecting the turning state of the turning wheels 6. The energization controller 64 obtains a deviation between the current command value and the value of the current I_{b}, and controls the electric power supply to the turning motor 31 such that the deviation is eliminated. As a result, the turning motor 31 generates torque according to the turning torque command value Tₚ*.

The current limiting processing unit 66 determines whether or not a specific event has occurred. The specific event is an event in which the turning operation of the turning wheels 6, that is, an output of the turning motor 31 has to be limited, and examples thereof include the following first to fourth events B1 to B4.

B1. A temperature of the turning motor 31 excessively rises. B2. A voltage input to the turning control device 1B is decreased. B3. A high load is continuously applied to the turning motor 31.

B4. In a case where the turning motor 31 has two systems of winding groups, electric power supply to any one of the two systems of winding groups is difficult. The current limiting processing unit 66 determines that the first event B1 has occurred when a first determination condition is satisfied. The first determination condition includes, for example, a condition in which a temperature Tₘ of the turning motor 31 detected by the temperature sensor exceeds a temperature threshold. Note that the current limiting processing unit 66 may calculate the temperature of the turning motor 31 based on the value of the current I_{b} of the turning motor 31 or an integrated value of the value of the current I_{b}.

The current limiting processing unit 66 determines that the second event B2 has occurred when a second determination condition is satisfied. The second determination condition includes, for example, a condition in which a value of a voltage V_{b} input to the turning control device 1B falls below a voltage threshold. The voltage V_{b} is a voltage drawn from a battery mounted on the vehicle to the turning control device 1B. The voltage V_{b} is also a voltage input to the steering control device 1. However, the second determination condition may also be a condition in which a value of the voltage of the battery detected by a voltage sensor falls below the voltage threshold. The battery is a main power source of the vehicle.

The current limiting processing unit 66 determines that the third event B3 has occurred when a third determination condition is satisfied. The third determination condition includes, for example, a condition in which the value of the current I_{b} supplied to the turning motor 31 exceeds a current threshold for a predetermined time. The third event B3 occurs, for example, in a case where the turning wheel 6 hits an obstacle such as a curb during a stationary turn, or in a case where an end hit of the turning shaft 22 occurs. The end hit refers to a situation where the rack end 24, which is an end portion of the turning shaft 22, abuts against the housing 23.

The current limiting processing unit 66 determines that the fourth event B4 has occurred when a fourth determination condition is satisfied. In a case where the turning motor 31 has two systems of winding groups, the turning control device 1B has two electric power supply systems and two control systems. The fourth determination condition includes, for example, a condition in which an abnormality determination signal S_{d} generated by an abnormality determination unit of the turning control device 1B indicates an abnormality in one of the two electric power supply systems or an abnormality in one of the two control systems. The electric power supply system includes a motor drive circuit. The control system includes a CPU and various sensors.

In a case where the abnormality is detected in one of the two electric power supply systems or the abnormality is detected in one of the two control systems, the turning control device 1B transitions a drive mode of the turning motor 31 from a cooperative drive mode to a single-system drive mode. The cooperative drive mode is a drive mode in a case where both the two systems are normal, and is a drive mode in which the winding groups of the two systems generate the same torque. The single-system drive mode is a drive mode in a case where any one of the two systems is determined to be abnormal, and is a drive state in which solely the winding group of the normal system among the two systems generates a torque.

The current limiting processing unit 66 executes a current limiting process for the turning motor 31 when the current limiting processing unit 66 determines that the specific event (B1 to B4) has occurred. The current limiting process is an example of an output limiting process for limiting the output of the turning motor 31, and is a process of limiting the current supplied to the turning motor 31. Specifically, the current limiting processing unit 66 calculates a limit value Iₗᵢₘ for limiting the amount of current supplied to the turning motor 31. The limit value Iₗᵢₘ is an upper limit of the amount of current supplied to the turning motor 31. The limit value Iₗᵢₘ is, for example, a value of the current set based on a viewpoint of limiting the current of the turning motor 31 by a predetermined limiting ratio from a viewpoint of protecting the turning motor 31 from overheating or to suppress a decrease in voltage of the battery.

In a case where the limit value Iₗᵢₘ is calculated by the current limiting processing unit 66, the energization controller 64 limits the amount of current supplied to the turning motor 31 according to the limit value Iₗᵢₘ. The energization controller 64 compares an absolute value of the current to be supplied to the turning motor 31 with the limit value Iₗᵢₘ. When the absolute value of the current to be supplied to the turning motor 31 is greater than the limit value Iₗᵢₘ, the energization controller 64 limits the absolute value of the current to be supplied to the turning motor 31 to the limit value Iₗᵢₘ. When the absolute value of the current to be supplied to the turning motor 31 is equal to or smaller than the limit value Iₗᵢₘ, the energization controller 64 supplies the original current calculated through the feedback control of the current I_{b} to the turning motor 31 as it is.

The current limiting processing unit 66 sets a value of a current limit flag Fₗᵢₘ according to a determination result of whether or not a specific event has occurred. When the current limiting processing unit 66 determines that none of the first to fourth events B1 to B4 has occurred, the current limiting processing unit 66 sets the value of the current limit flag Fₗᵢₘ to "0". When the current limiting processing unit 66 determines that the first event B1 has occurred, the current limiting processing unit 66 sets the value of the current limit flag Fₗᵢₘ to "1". When the current limiting processing unit 66 determines that the second event B2 has occurred, the current limiting processing unit 66 sets the value of the current limit flag Fₗᵢₘ to "2". When the current limiting processing unit 66 determines that the third event B3 has occurred, the current limiting processing unit 66 sets the value of the current limit flag Fₗᵢₘ to "3". When the current limiting processing unit 66 determines that the fourth event B4 has occurred, the current limiting processing unit 66 sets the value of the current limit flag Fₗᵢₘ to "4". The current limit flag Fₗᵢₘ is an electrical signal that indicates whether or not the current limiting process for the turning motor 31 is being executed, and is also an electrical signal including information about a content of a specific event.

The current limiting processing unit 66 ends the execution of the current limiting process for the turning motor 31 when a predetermined end condition is satisfied during the execution of the current limiting process for the turning motor 31. The end condition may be, for example, a condition in which the first to fourth conditions mentioned above are not satisfied, or a condition set individually for each of the first to fourth events B1 to B4. In a case where the end condition of the current limiting process is satisfied, the current limiting processing unit 66 stops the calculation of the limit value Iₗᵢₘ and sets the value of the current limit flag Fₗᵢₘ to "0".

### Configuration of Reaction Force Torque Command Value Calculation Unit 52

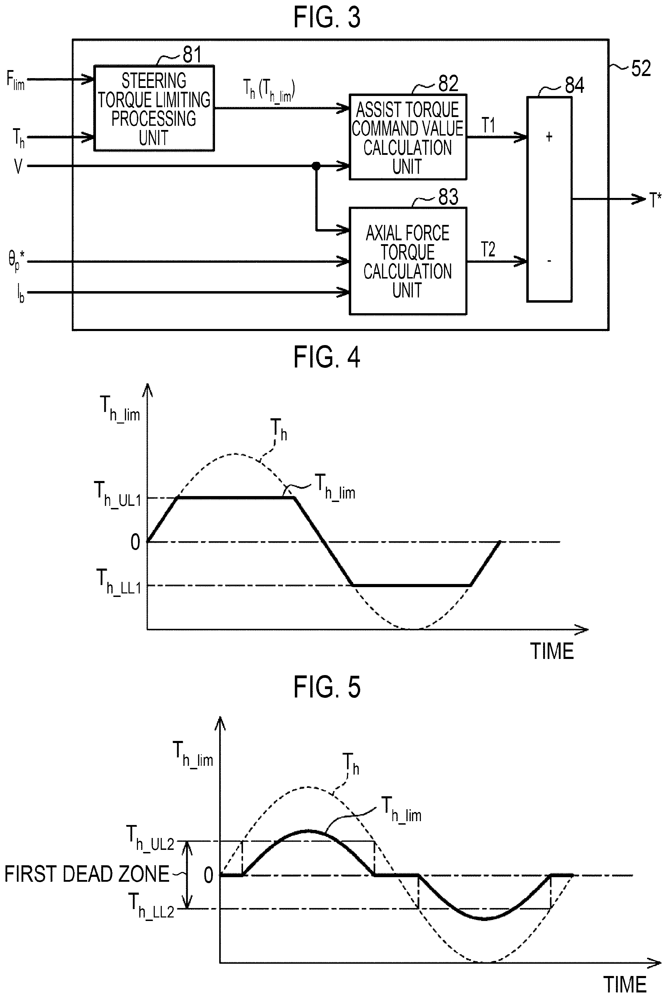

Next, a configuration of the reaction force torque command value calculation unit 52 will be described in detail. As shown in FIG. 3, the reaction force torque command value calculation unit 52 includes a steering torque limiting processing unit 81, an assist torque command value calculation unit 82, an axial force torque calculation unit 83, and a calculator 84.

The steering torque limiting processing unit 81 receives the steering torque Tₕ detected through the torque sensor 42 and the value of the current limit flag Fₗᵢₘ set by the current limiting processing unit 66. The steering torque limiting processing unit 81 executes a steering torque limiting process according to the value of the current limit flag Fₗᵢₘ. The steering torque limiting process is a process of limiting the steering torque Tₕ to limit the output of the turning motor 31.

The steering torque limiting processing unit 81 does not execute the steering torque limiting process in a case where the value of the current limit flag Fₗᵢₘ is "0". That is, the steering torque Tₕ detected through the torque sensor 42 is used as it is for controlling the turning motor 31. The steering torque limiting processing unit 81 executes the steering torque limiting process in a case where the current of the turning motor 31 is limited, that is, in a case where the value of the current limit flag Fₗᵢₘ is any one of "1" to "4". The steering torque limiting processing unit 81 generates a limit steering torque T_{h_lim} by limiting a value of the steering torque Tₕ through the execution of the steering torque limiting process. The steering torque limiting processing unit 81 switches a method of limiting the value of the steering torque Tₕ according to the value of the current limit flag Fₗᵢₘ.

The assist torque command value calculation unit 82 receives the steering torque Tₕ from the steering torque limiting processing unit 81 or the limit steering torque T_{h_lim}. Additionally, the assist torque command value calculation unit 82 receives the vehicle speed V detected by the vehicle speed sensor 41. The assist torque command value calculation unit 82 calculates an assist torque command value T1 based on the steering torque Tₕ or the limit steering torque T_{h_lim}, and the vehicle speed V. The assist torque command value T1 corresponds to a target value of an assist torque in a case where the steering device 2 is an electric power steering device. The assist torque is a force for assisting in steering of the steering wheel 5. The assist torque command value T1 is a torque in the same direction as the steering direction of the steering wheel 5. An absolute value of the assist torque command value T1 increases as the absolute value of the steering torque Tₕ increases and the vehicle speed V decreases.

The axial force torque calculation unit 83 receives the target pinion angle θₚ* calculated by the target pinion angle calculation unit 62, the value of the current I_{b} of the turning motor 31 detected through the current sensor 65, and the vehicle speed V detected through the vehicle speed sensor 41. The axial force torque calculation unit 83 calculates an axial force acting on the turning shaft 22 based on the target pinion angle θₚ*, the value of the current I_{b} of the turning motor 31, and the vehicle speed V. The axial force torque calculation unit 83 calculates an axial force torque T2 by converting the calculated axial force into a torque with respect to the steering shaft 11.

Additionally, the axial force torque calculation unit 83 may calculate the axial force acting on the turning shaft 22 based on solely any one of the target pinion angle θₚ* and the value of the current I_{b} of the turning motor 31. Alternatively, the axial force torque calculation unit 83 may receive the pinion angle θₚ or the steering angle θₛ instead of the target pinion angle θₚ*.

The calculator 84 receives the assist torque command value T1 calculated by the assist torque command value calculation unit 82 and the axial force torque T2 calculated by the axial force torque calculation unit 83. The calculator 84 calculates the reaction force torque command value T* by subtracting the axial force torque T2 from the assist torque command value T1.

### Method of Limiting Value of Steering Torque Tₕ

Next, a method of limiting the value of the steering torque Tₕ will be described. The steering torque limiting processing unit 81 can execute first to third limiting processes for the steering torque Tₕ. The first to third limiting processes are processes with different limit modes for the steering torque Tₕ. The steering torque limiting processing unit 81 executes any one of the first to third limiting process according to the value of the current limit flag Fₗᵢₘ. The steering torque limiting processing unit 81 executes the first limiting process in a case where the value of the current limit flag Fₗᵢₘ is "1" or "4". The steering torque limiting processing unit 81 executes the second limiting process in a case where the value of the current limit flag Fₗᵢₘ is "2". The steering torque limiting processing unit 81 executes a third limiting process in a case where the value of the current limit flag Fₗᵢₘ is "3".

### First Limiting Process

As shown in FIG. 4, the first limiting process is a process of limiting a change range of the value of the steering torque Tₕ. The change range of the value of the steering torque Tₕ is, for example, a range between a first upper limit T_{h_UL1} and a first lower limit T_{h_LL1}. The first upper limit T_{h_UL1} is a positive value, and the first lower limit T_{h_LL1} is a negative value. The first upper limit T_{h_UL1} and the first lower limit T_{h_LL1} are limit values for the value of the steering torque Tₕ, and are stored in the memory. In FIG. 4, as an example, the value of the steering torque Tₕ changes in a sine wave shape.

The steering torque limiting processing unit 81 compares the value of the steering torque Tₕ with the first upper limit T_{h_UL1} in a case where the value of the steering torque Tₕ is a positive value. The steering torque limiting processing unit 81 limits the value of the steering torque Tₕ to the first upper limit T_{h_UL1} in a case where the value of the steering torque Tₕ exceeds the first upper limit T_{h_UL1}. The steering torque Tₕ after being limited to the first upper limit T_{h_UL1} is the limit steering torque T_{h_lim}.

The steering torque limiting processing unit 81 compares the value of the steering torque Tₕ with the first lower limit T_{h_LL1} in a case where the value of the steering torque Tₕ is a negative value. In a case where the value of the steering torque Tₕ falls below the first lower limit T_{h_LL1}, the steering torque limiting processing unit 81 limits the value of the steering torque Tₕ to the first lower limit T_{h_LL1}. The steering torque Tₕ after being limited to the first lower limit T_{h_LL1} is the limit steering torque T_{h_lim}.

In a case where the value of the steering torque Tₕ is within a range between the first upper limit T_{h_UL1} and the first lower limit T_{h_LL1}, the steering torque limiting processing unit 81 sets the value of the steering torque Tₕ detected through the torque sensor 42 as it is as a value of the limit steering torque T_{h_lim}.

The assist torque command value calculation unit 82 calculates the assist torque command value T1 by using the limit steering torque T_{h_lim} obtained through the first limiting process. However, the absolute value of the assist torque command value T1 is smaller than the assist torque command value T1 calculated using the steering torque Tₕ by an amount by which the value of the steering torque Tₕ is limited. As the absolute value of the assist torque command value T1 decreases, the reaction force torque command value T* calculated by the calculator 84, and thus the steering reaction force increases.

In a case where the first limiting process is executed, when the steering wheel 5 is steered beyond a small steering angle region, the steering reaction force becomes greater than the original steering reaction force according to the steering torque Tₕ. Therefore, the driver of the vehicle can be given a steering feel as if the steering wheel 5 has become heavier, as a response through the steering wheel 5. A weight of the steering wheel 5 is, in a case where the steering device 2 is an electric power steering device that applies an assist force to the steering wheel 5, the same as the weight of the steering wheel 5 when no assist force is applied to the steering wheel 5. The driver of the vehicle can recognize that the first event B1 or the fourth event B4 has occurred by feeling the steering reaction force through the steering wheel 5 as a response.

### Second Limiting Process

As shown in FIG. 5, the second limiting process is a process of setting a first dead zone for the steering torque Tₕ and limiting the value of the steering torque Tₕ to "0" in a case where the value of the steering torque Tₕ reaches a value within the first dead zone. The first dead zone is a certain range of the value of the steering torque Tₕ including "0". The first dead zone is a range between a second upper limit T_{h_UL2} and a second lower limit T_{h_LL2}. The second upper limit T_{h_UL2} is a positive value, and the second lower limit T_{h_LL2} is a negative value. The second upper limit T_{h_UL2} and the second lower limit T_{h_LL2} are limit values for the value of the steering torque Tₕ, and are stored in the memory. In FIG. 5, as an example, the value of the steering torque Tₕ changes in a sine wave shape.

In a case where the value of the steering torque Tₕ that is the input is a positive value, the steering torque limiting processing unit 81 sets the value of the limit steering torque T_{h_lim} that is the output to "0" until the value of the steering torque Tₕ exceeds the second upper limit T_{h_UL2}. The steering torque limiting processing unit 81 sets the value of the limit steering torque T_{h_lim} according to the value of the steering torque Tₕ after the value of the steering torque Tₕ exceeds the second upper limit T_{h_UL2}. However, due to an influence of the first dead zone, the value of the limit steering torque T_{h_lim} does not follow the value of the original steering torque Tₕ that changes in a sine wave shape. The value of the limit steering torque T_{h_lim} is smaller than the value of the original steering torque Tₕ.

In a case where the value of the steering torque Tₕ that is the input is a negative value, the steering torque limiting processing unit 81 sets the value of the limit steering torque T_{h_lim} that is the output to "0" until the value of the steering torque Tₕ falls below the second lower limit T_{h_LL2}. The steering torque limiting processing unit 81 sets the value of the limit steering torque T_{h_lim} according to the value of the steering torque Tₕ after the value of the steering torque Tₕ falls below the second lower limit T_{h_LL2}. However, due to an influence of the first dead zone, the value of the limit steering torque T_{h_lim} does not follow the value of the original steering torque Tₕ that changes in a sine wave shape. The value of the limit steering torque T_{h_lim} is smaller than the value of the original steering torque Tₕ.

In a case where the second limiting process is executed, the steering reaction force is rapidly increased or decreased with the steering of the steering wheel 5. Therefore, as a response through the steering wheel 5, the driver of the vehicle can be given a steering feel with a sense of resistance. The driver of the vehicle can recognize that the second event B2 has occurred by feeling the steering reaction force through the steering wheel 5 as a response.

### Third Limiting Process

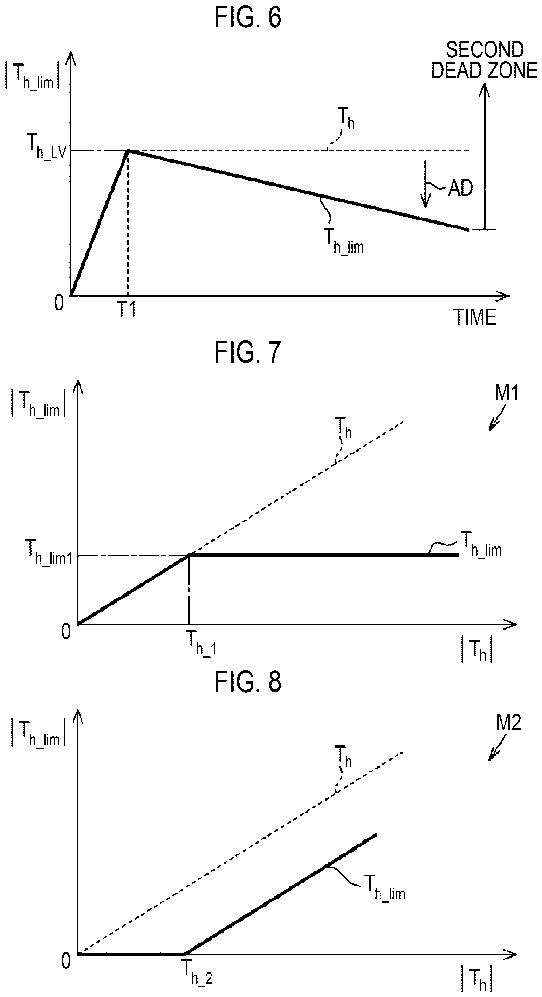

As shown in FIG. 6, the third limiting process is a process of setting a second dead zone specified by a limit value T_{h_LV} with respect to the absolute value of the steering torque Tₕ, and gradually increasing the second dead zone by gradually decreasing the limit value T_{h_LV} after the absolute value of the steering torque Tₕ reaches a value within the second dead zone, thereby limiting the absolute value of the steering torque Tₕ to the limit value T_{h_LV}. The limit value T_{h_LV} is a value greater than "0" and is a boundary value of the second dead zone. That is, the second dead zone is a range of the absolute value of the steering torque Tₕ equal to or more than the limit value T_{h_LV}. The limit value T_{h_LV} is set to the same value as the absolute value of the steering torque Tₕ when an end hit occurs, for example. The limit value T_{h_LV} is stored in the memory.

For example, in a case where an end hit occurs and a state of the end hit continues, the absolute value of the steering torque Tₕ changes as follows. That is, the absolute value of the steering torque Tₕ gradually increases with the steering of the steering wheel 5, and eventually reaches a predetermined value (time T1). The predetermined value is equal to the limit value T_{h_LV}. In a case where the end hit is continued, the absolute value of the steering torque Tₕ is maintained at the predetermined value.

The steering torque limiting processing unit 81 sets the absolute value of the steering torque Tₕ as an absolute value of the limit steering torque T_{h_lim} until the absolute value of the steering torque Tₕ reaches the limit value T_{h_LV}. The steering torque limiting processing unit 81 gradually expands a range of the dead zone after the absolute value of the steering torque Tₕ reaches the limit value T_{h_LV}. That is, as shown by an arrow AD in FIG. 6, the steering torque limiting processing unit 81 gradually decreases the limit value T_{h_LV}.

The steering torque limiting processing unit 81 compares the absolute value of the steering torque Tₕ with the limit value T_{h_LV}. The steering torque limiting processing unit 81 limits the absolute value of the steering torque Tₕ to the limit value T_{h_LV} in a case where the absolute value of the steering torque Tₕ exceeds the limit value T_{h_LV}. The absolute value of the steering torque Tₕ after being limited to the limit value T_{h_LV} is the absolute value of the limit steering torque T_{h_lim}. Since the limit value T_{h_LV} gradually decreases, the absolute value of the steering torque Tₕ, and thus the absolute value of the limit steering torque T_{h_lim} gradually decrease.

In a case where the third limiting process is executed, the steering reaction force gradually increases with the steering of the steering wheel 5. Therefore, as a response through the steering wheel 5, the driver of the vehicle can be given a steering feel as if the steering wheel 5 is gradually pushed back, or a steering feel with a sense of collision. The driver of the vehicle can recognize that the third event B3 has occurred by feeling the steering reaction force through the steering wheel 5 as a response.

### Modification Example of First Limiting Process

Incidentally, the steering torque limiting processing unit 81 may execute the following process as the first limiting process. That is, the steering torque limiting processing unit 81 calculates the limit steering torque T_{h_lim} by using a first conversion map M1 or a second conversion map M2 instead of the first upper limit T_{h_UL1} and the first lower limit T_{h_LL1}. The first conversion map M1 or the second conversion map M2 is stored in the memory.

As shown in FIG. 7, the first conversion map M1 is a two-dimensional map that specifies a relationship between the absolute value of the steering torque Tₕ and the absolute value of the limit steering torque T_{h_lim}. The first conversion map M1 has the following characteristics. That is, in a case where the absolute value of the steering torque Tₕ gradually increases, after the absolute value of the steering torque Tₕ reaches a first steering torque threshold T_{h_1}, the absolute value of the limit steering torque T_{h_lim} is maintained at a set value T_{h_lim1} regardless of the absolute value of the steering torque Tₕ. Here, the set value T_{h_lim1} is a certain value smaller than the absolute value of the steering torque Tₕ. The first steering torque threshold T_{h_1} is, for example, a value near "0".

When the steering wheel 5 is steered beyond the small steering angle region by executing the first limiting process using the first conversion map M1, the steering reaction force becomes greater than the original steering reaction force according to the steering torque Tₕ. Therefore, the driver of the vehicle can be given a steering feel as if the steering wheel 5 has become heavier, as a response through the steering wheel 5. In a case where the steering device 2 is assumed to be an electric power steering device, the same steering feel as when no assist force is applied to the steering wheel 5 can be reproduced.

As shown in FIG. 8, the second conversion map M2 is a two-dimensional map that specifies a relationship between the absolute value of the steering torque Tₕ and the absolute value of the limit steering torque T_{h_lim}. The second conversion map M2 has the following characteristics. That is, in a case where the absolute value of the steering torque Tₕ gradually increases, the absolute value of the limit steering torque T_{h_lim} is maintained at "0" until the absolute value of the steering torque Tₕ reaches a second steering torque threshold T_{h_2}. After the absolute value of the steering torque Tₕ reaches the second steering torque threshold T_{h_2}, the absolute value of the limit steering torque T_{h_lim} gradually increases. However, the absolute value of the limit steering torque T_{h_lim} is smaller than the absolute value of the steering torque Tₕ. The second steering torque threshold T_{h_2} is, for example, a value near "0".

When the steering wheel 5 is steered within the small steering angle region by executing the first limiting process using the second conversion map M2, the same steering reaction force as when the absolute value of the steering torque Tₕ is "0" is applied to the steering wheel 5. Therefore, as a response through the steering wheel 5, the driver of the vehicle can be given a steering feel with a sense of collision.

When the steering wheel 5 is steered beyond the small steering angle region, the steering reaction force decreases as the absolute value of the steering torque Tₕ increases. Therefore, as a response through the steering wheel 5, the driver of the vehicle can be given a steering feel as if the steering wheel 5 becomes gradually lighter.

### Effects of First Embodiment

The first embodiment has the following effects.

1-1
The steering control device 1 includes the steering torque limiting processing unit 81. In a case where an event occurs in which the output of the turning motor 31 is limited, the steering torque limiting processing unit 81 limits the value of the steering torque Tₕ. Since the reaction force torque command value T* is increased by the amount by which the value of the steering torque Tₕ is limited, the steering reaction force applied to the steering wheel 5 also increases. Therefore, the driver of the vehicle can recognize that the output of the turning motor 31 is limited by feeling the steering reaction force through the steering wheel 5 as a response. Therefore, the driver of the vehicle can be appropriately informed that the output of the turning motor 31 is limited.

1-2
In a case where the event occurs in which the output of the turning motor 31 is limited, the value of the steering torque Tₕ is limited. As a result, in a case where the steering device 2 is assumed to be an electric power steering device, the same steering feel as when no assist force is applied to the steering wheel 5 can be reproduced. Even in a case where a steering speed of the steering wheel 5 is slow, the reaction force torque command value T* and thus the steering reaction force is increased by the amount by which the value of the steering torque Tₕ is limited. Therefore, the driver of the vehicle can be reliably informed that the output of the turning motor 31 is limited.

1-3
In a case where the event occurs in which the output of the turning motor 31 is limited, the steering torque limiting processing unit 81 executes the limiting process of limiting the steering torque Tₕ. The limiting process includes a plurality of limiting processes with different limit modes for the steering torque Tₕ. The steering torque limiting processing unit 81 switches the limiting process to be executed according to a content of the event in which the output of the turning motor 31 is limited. With this configuration, any one of the limiting processes with different limit modes for the steering torque Tₕ is executed according to the content of the event in which the output of the turning motor 31 is limited. Therefore, the value of the steering torque Tₕ can be appropriately limited according to the content of the event in which the output of the turning motor 31 is limited.

1-4
The limiting process for the steering torque Tₕ includes, for example, the first limiting process, the second limiting process, and the third limiting process. With this configuration, any one of the first to third limiting processes is executed according to the content of the event in which the output of the turning motor 31 is limited. Therefore, the value of the steering torque Tₕ can be appropriately limited according to the content of the event in which the output of the turning motor 31 is limited. Additionally, since the limit modes for the value of the steering torque Tₕ of the first to third limiting processes are different, the driver of the vehicle can be given different steering feels according to the content of the event as a response through the steering wheel 5. The driver of the vehicle can recognize the content of the event in which the output of the turning motor 31 is limited by feeling the steering reaction force through the steering wheel 5 as a response.

1-5
In a case where the first event B1 or the fourth event B4 occurs, the steering torque limiting processing unit 81 executes the first limiting process. By executing the first limiting process, the driver of the vehicle can be given a steering feel as if the steering wheel 5 has become heavier, as a response through the steering wheel 5. The driver of the vehicle can recognize that the first event B1 or the fourth event B4 has occurred by feeling the steering reaction force through the steering wheel 5 as a response.

1-6
The steering torque limiting processing unit 81 executes the second limiting process in a case where the second event occurs. By executing the second limiting process, the driver of the vehicle can be given a steering feel with a sense of resistance, as a response through the steering wheel 5. The driver of the vehicle can recognize that the second event B2 has occurred by feeling the steering reaction force through the steering wheel 5 as a response.

1-7
The steering torque limiting processing unit 81 executes the third limiting process in a case where the third event B3 occurs. By executing the third limiting process, as a response through the steering wheel 5, the driver of the vehicle can be given a steering feel as if the steering wheel 5 is gradually pushed back, or a steering feel with a sense of collision. The driver of the vehicle can recognize that the third event B3 has occurred by feeling the steering reaction force through the steering wheel 5 as a response.

### Second Embodiment

Next, a second embodiment of the steering control device will be described. The present embodiment basically has the same configuration as the first embodiment shown in FIGS. 1 and 2. The present embodiment is different from the first embodiment in that the configuration of the reaction force torque command value calculation unit 52 is different. Therefore, the same members and configurations as those of the first embodiment are denoted by the same reference numerals, and a detailed description thereof will be omitted.

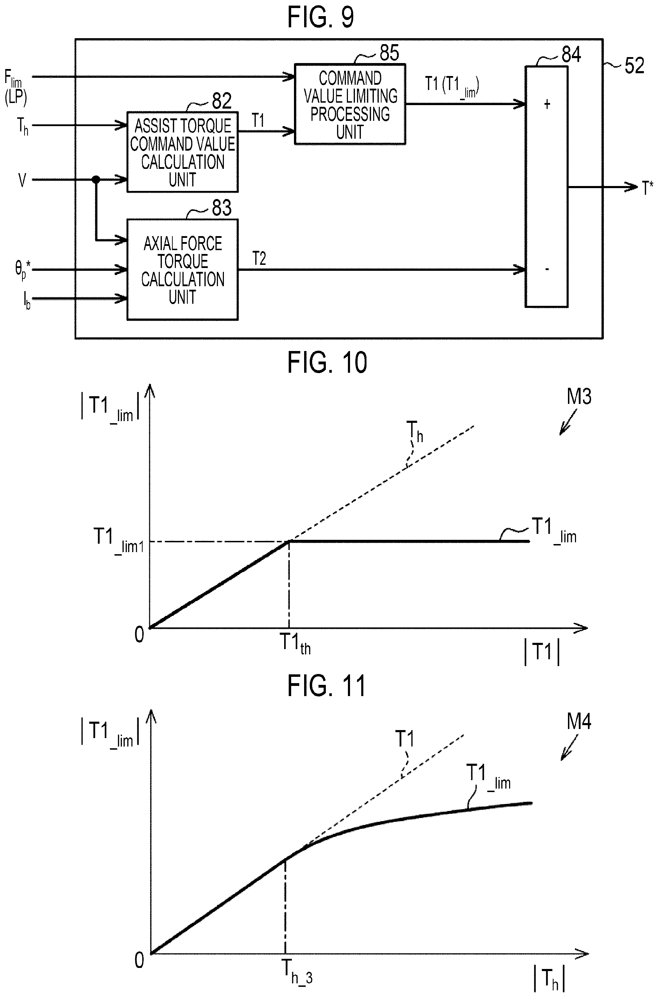

As shown in FIG. 9, the reaction force torque command value calculation unit 52 has a command value limiting processing unit 85 instead of the previous steering torque limiting processing unit 81. The command value limiting processing unit 85 receives the assist torque command value T1 calculated by the assist torque command value calculation unit 82 and the value of the current limit flag Fₗᵢₘ set by the current limiting processing unit 66. Here, the current limit flag Fₗᵢₘ includes information indicating a limiting ratio LP of the current supplied to the turning motor 31. The limiting ratio LP is an amount of current actually supplied to the turning motor 31 among the original current supplied from the energization controller 64 to the turning motor 31. The limiting ratio LP is, for example, a value in a range of "0.1" or more and "1.0" or less, and is set in increments of "0.1". "0.1" corresponds to "10%".

The command value limiting processing unit 85 executes a command value limiting process according to the limiting ratio LP included in the current limit flag Fₗᵢₘ. The command value limiting process is a process of limiting the assist torque command value T1 in order to limit the output of the turning motor 31. The command value limiting processing unit 85 does not execute the command value limiting processing in a case where the value of the current limit flag Fₗᵢₘ is "0". That is, the assist torque command value T1 calculated by the assist torque command value calculation unit 82 is used for controlling the turning motor 31 as it is. The command value limiting processing unit 85 executes the command value limiting process in a case where the value of the current limit flag Fₗᵢₘ is any one of "1" to "4". The command value limiting processing unit 85 generates a limit assist torque command value T1_{_lim} by limiting the assist torque command value T1 through the execution of the command value limiting process.

The command value limiting processing unit 85 limits the assist torque command value T1 by the same ratio as the limiting ratio LP, for example. For example, in a case where the limiting ratio LP is "0.9", the limit assist torque command value T1_{_lim} is 90% of the original assist torque command value T1 calculated by the assist torque command value calculation unit 82. To the extent to which an absolute value of the limit assist torque command value T1_{_lim} is smaller than the absolute value of the original assist torque command value T1, the reaction force torque command value T* calculated by the calculator 84 and thus the steering reaction force increases.

In a case where the command value limiting process is executed, the steering reaction force becomes greater than the steering reaction force under normal conditions in which the command value limiting process is not executed. Therefore, as a response through the steering wheel 5, the driver of the vehicle can be given a steering feel as if the steering wheel 5 is heavier than normal conditions. The driver of the vehicle can recognize that any one of the first to fourth events B1 to B4 has occurred by feeling the steering reaction force through the steering wheel 5 as a response.

### Effect of Second Embodiment

The second embodiment has the following effects.

2-1
The steering control device 1 includes the command value limiting processing unit 85. In a case where an event occurs in which the output of the turning motor 31 is limited, the command value limiting processing unit 85 limits the assist torque command value T1. Since the reaction force torque command value T* is increased by an amount by which the assist torque command value T1 is limited, the steering reaction force applied to the steering wheel 5 also increases. Therefore, the driver of the vehicle can recognize that the output of the turning motor 31 is limited by feeling the steering reaction force through the steering wheel 5 as a response. Therefore, the driver of the vehicle can be appropriately informed that the output of the turning motor 31 is limited.

2-2
In a case where the event occurs in which the output of the turning motor 31 is limited, the output of the turning motor 31 is limited by limiting the current I_{b} supplied to the turning motor 31 by a predetermined limiting ratio LP. In a case where an event occurs in which the output of the turning motor 31 is limited, the command value limiting processing unit 85 limits the assist torque command value T1 by the same ratio as the limiting ratio LP. Therefore, the steering reaction force increases according to a degree to which the output of the turning motor 31 is limited. Therefore, the driver of the vehicle can recognize that the output of the turning motor 31 is limited by feeling the steering reaction force through the steering wheel 5 as a response.

2-3
In a case where the event occurs in which the output of the turning motor 31 is limited, the assist torque command value T1 is limited. Therefore, even in a case where the steering speed of the steering wheel 5 is slow, the reaction force torque command value T* and thus the steering reaction force is increased by the amount by which the assist torque command value T1 is limited. Therefore, the driver of the vehicle can be reliably informed that the output of the turning motor 31 is limited.

### Other Embodiments

Each of the embodiments may be implemented with the following changes. In the first embodiment, the steering torque limiting processing unit 81 may not switch the method of limiting the value of the steering torque Tₕ between the first to third limiting processes according to the value of the current limit flag Fₗᵢₘ. In this case, the steering torque limiting processing unit 81 gradually decreases the absolute value of the steering torque Tₕ regardless of whether the value of the current limit flag Fₗᵢₘ is any of "1" to "4", for example. An absolute value of the gradually decreasing steering torque Tₕ is set as the absolute value of the limit steering torque T_{h_lim}. As the absolute value of the limit steering torque T_{h_lim} gradually decreases, the reaction force torque command value T* and thus the steering reaction force gradually increases. Therefore, as a response through the steering wheel 5, the driver of the vehicle can be given a steering feel as if the steering wheel 5 is gradually getting heavier. The driver of the vehicle can recognize that any one of the first to fourth events B1 to B4 has occurred by feeling the steering reaction force through the steering wheel 5 as a response.

In the second embodiment, in a case where the current of the turning motor 31 is limited, that is, in a case where the value of the current limit flag Fₗᵢₘ is any one of "1" to "4", the command value limiting processing unit 85 may execute a process for increasing an absolute value of the axial force torque T2 calculated by the axial force torque calculation unit 83. The command value limiting processing unit 85 increases the absolute value of the axial force torque T2, for example, by multiplying the absolute value of the axial force torque T2 by a gain. The gain is a value greater than "1". In this way, in a case where the current of the turning motor 31 is limited, a greater steering reaction force is applied to the steering wheel 5. Therefore, the driver of the vehicle can recognize that any one of the first to fourth events B1 to B4 has occurred by feeling the steering reaction force through the steering wheel 5 as a response.

In the second embodiment, the command value limiting processing unit 85 may calculate the limit assist torque command value T1_{_lim} by using a third conversion map M3 instead of the limiting ratio LP. The third conversion map M3 is stored in the memory. The current limit flag Fₗᵢₘ may not include the information indicating the limiting ratio LP of the current supplied to the turning motor 31.

As shown in FIG. 10, the third conversion map M3 is a two-dimensional map that specifies a relationship between the absolute value of the assist torque command value T1 and the absolute value of the limit assist torque command value T1_{_lim}. The third conversion map M3 has the following characteristics. That is, in a case where the absolute value of the assist torque command value T1 gradually increases, after the absolute value of the assist torque command value T1 reaches a command value threshold T1ₜₕ, the absolute value of the limit assist torque command value T1_{_lim} is maintained at a set value T1_ₗᵢₘ₁ regardless of the absolute value of the assist torque command value T1. However, the set value T1_{_lim1} is a certain value smaller than the absolute value of the assist torque command value T1. The command value threshold T1ₜₕ is, for example, a value near "0".

By executing the command value limiting process using the third conversion map M3, when the steering wheel 5 is steered beyond the small steering angle region, the steering reaction force becomes greater than the original steering reaction force according to the steering torque Tₕ. Therefore, the driver of the vehicle can be given a steering feel as if the steering wheel 5 has become heavier, as a response through the steering wheel 5. The driver of the vehicle can recognize that any one of the first to fourth events B1 to B4 has occurred by feeling the steering reaction force through the steering wheel 5 as a response.

In addition, by using the third conversion map M3, the limit assist torque command value T1_{_lim} can be easily obtained from the assist torque command value T1. Obtaining the limit assist torque command value T1_{_lim} by using the third conversion map M3 is to limit the assist torque command value T1 used to control the reaction force motor 12.

In the second embodiment, a configuration in which the command value limiting processing unit 85 is omitted may be adopted as the reaction force torque command value calculation unit 52. In this case, the assist torque command value calculation unit 82 has a function of the command value limiting processing unit 85. The assist torque command value calculation unit 82 receives the value of the steering torque Tₕ detected through the torque sensor 42 and the value of the current limit flag Fₗᵢₘ set by the current limiting processing unit 66. Note that the current limit flag Fₗᵢₘ may not include the information indicating the limiting ratio LP of the current supplied to the turning motor 31.

The assist torque command value calculation unit 82 does not execute the command value limiting process in a case where the value of the current limit flag Fₗᵢₘ is "0". That is, the assist torque command value T1 calculated by the assist torque command value calculation unit 82 is used for controlling the turning motor 31 as it is. The command value limiting processing unit 85 executes the command value limiting process in a case where the value of the current limit flag Fₗᵢₘ is any one of "1" to "4". The command value limiting processing unit 85 generates the limit assist torque command value T1_{_lim} by limiting the assist torque command value T1 through the execution of the command value limiting process. The assist torque command value calculation unit 82 calculates the limit assist torque command value T1_{_lim} by using, for example, a fourth conversion map M4. The fourth conversion map M4 is stored in the memory.

As illustrated in FIG. 11, the fourth conversion map M4 is a two-dimensional map that specifies a relationship between the absolute value of the steering torque Tₕ and the absolute value of the limit assist torque command value T1_{_lim}. The fourth conversion map M4 has the following characteristics. That is, in a case where the absolute value of the steering torque Tₕ gradually increases, after the absolute value of the steering torque Tₕ reaches a third steering torque threshold T_{h_3}, the absolute value of the limit assist torque command value T1_{_lim} gradually decreases as the absolute value of the steering torque Tₕ increases. However, as the absolute value of the steering torque Tₕ increases, an inclination, which is a ratio of a change in the absolute value of the limit assist torque command value T1_{_lim} with respect to the absolute value of the steering torque Tₕ, gradually decreases.

The absolute value of the limit assist torque command value T1_{_lim} is the same value as the absolute value of the assist torque command value T1 until the absolute value of the steering torque Tₕ reaches the third steering torque threshold T_{h_3}. The absolute value of the limit assist torque command value T1_{_lim} is smaller than the absolute value of the assist torque command value T1 after the absolute value of the steering torque Tₕ reaches the third steering torque threshold T_{h_3}. The third steering torque threshold T_{h_3} is, for example, a value near "0".

By executing the command value limiting process using the fourth conversion map M4, when the steering wheel 5 is steered beyond the small steering angle region, the steering reaction force becomes greater than the original steering reaction force according to the steering torque Tₕ. However, the steering reaction force gradually increases as the absolute value of the steering torque Tₕ increases. Therefore, as a response through the steering wheel 5, the driver of the vehicle can be given a steering feel as if the steering wheel 5 is gradually getting heavier. The driver of the vehicle can recognize that any one of the first to fourth events B1 to B4 has occurred by feeling the steering reaction force through the steering wheel 5 as a response.

In addition, by using the fourth conversion map M4, the limit assist torque command value T1_ₗᵢₘ can be easily obtained from the absolute value of the steering torque Tₕ. Obtaining the limit assist torque command value T1_{_lim} by using the fourth conversion map M4 is to limit the assist torque command value T1 used to control the reaction force motor 12.

## Claims

1. A steering control device (1), **characterized by** comprising:
an assist torque command value calculation unit (82);
an axial force torque calculation unit (83);
a calculator (84); and
a limiting processing unit, wherein:
the steering control device (1) is configured to
control electric power supply to a reaction force motor (12) configured to generate a steering reaction force applied to a steering wheel (5) in which power transmission to turning wheels (6) of a vehicle is separated, based on a reaction force torque command value calculated according to a steering state of the steering wheel (5), and
control electric power supply to a turning motor (31) configured to generate a turning force for turning the turning wheels (6), based on a turning torque command value calculated according to the steering state of the steering wheel (5);
the assist torque command value calculation unit (82) is configured to calculate an assist torque command value that is a torque in the same direction as a steering direction of the steering wheel (5) based on a first state variable reflecting the steering state of the steering wheel (5);
the axial force torque calculation unit (83) is configured to calculate an axial force acting on a turning shaft (22) configured to turn the turning wheels (6) based on a second state variable reflecting a turning state of the turning wheels (6), and calculate an axial force torque by converting the calculated axial force into a torque with respect to the steering wheel (5);
the calculator (84) is configured to calculate the reaction force torque command value by subtracting the axial force torque from the assist torque command value; and
the limiting processing unit is configured to limit the first state variable or the assist torque command value in a case where an event in which an output of the turning motor (31) is limited occurs.

2. The steering control device (1) according to claim 1, **characterized in that**:
the limiting processing unit is configured to execute a limiting process of limiting the first state variable in a case where the event occurs;
the limiting process includes a plurality of limiting processes having different limit modes for the first state variable; and
the limiting processing unit is configured to switch the limiting process to be executed according to a content of the event.

3. The steering control device (1) according to claim 2, **characterized in that**:
the limiting process includes a first limiting process, a second limiting process, and a third limiting process;
the first limiting process is a process of limiting a change range of the first state variable based on a limit value determined for the first state variable or a process of limiting a value of the first state variable based on a conversion map that specifies a relationship between the first state variable and the first state variable after the limiting;
the second limiting process is a process of setting, with respect to the first state variable, a first dead zone that is a range of the value of the first state variable including zero, and limiting the value of the first state variable to zero in a case where the value of the first state variable reaches a value within the first dead zone; and
the third limiting process is a process of setting, with respect to an absolute value of the first state variable, a second dead zone that is a range of the absolute value of the first state variable specified by a boundary value greater than zero, and gradually increasing the second dead zone by gradually decreasing the boundary value after the absolute value of the first state variable reaches a value within the second dead zone such that an absolute value of the first state variable is limited to the boundary value.

4. The steering control device (1) according to claim 3, **characterized in that**:
the event includes
a first event in which a temperature of the turning motor (31) excessively rises,
a second event in which a voltage input to the steering control device (1) decreases,
a third event in which a high load is continuously applied to the turning motor (31), and
a fourth event in which, in a case where the turning motor (31) has two systems of winding groups, electric power supply to any one of the two systems of winding groups is difficult; and
the limiting processing unit is configured to execute the first limiting process in a case where the first event or the fourth event occurs, execute the second limiting process in a case where the second event occurs, and execute the third limiting process in a case where the third event occurs.

5. The steering control device (1) according to claim 1, **characterized in that**:
the turning motor (31) is configured such that, in a case where the event occurs, the output of the turning motor (31) is limited by limiting a current supplied to the turning motor (31) by a predetermined limiting ratio; and
the limiting processing unit is configured to limit the assist torque command value by the same ratio as the predetermined limiting ratio in a case where the event occurs.

6. The steering control device (1) according to claim 1, **characterized in that** the limiting processing unit is configured to, in a case where the event occurs, limit the assist torque command value based on a conversion map that specifies a relationship between the assist torque command value and the assist torque command value after the limiting.

7. The steering control device (1) according to claim 1, **characterized in that** the limiting processing unit is configured to, in a case where the event occurs, limit the assist torque command value based on a conversion map that specifies a relationship between the first state variable and the assist torque command value after the limiting.

8. The steering control device (1) according to any one of claims 1 to 7, **characterized in that**:
the first state variable is a steering torque applied to the steering wheel (5); and
the second state variable is at least one of a current of the turning motor (31) and a target rotation angle of a pinion shaft (21) that is rotated in conjunction with the turning shaft.
